# EUROPEAN PATENT SPECIFICATION

(11) **EP 4 649 104 B1**
(45) Date of publication and mention of the grant of the patent: **15.07.2026**
(21) Application number: 24700725.5
(22) Date of filing: 10.01.2024
(51) Int. Cl.: C08G 65/00, C08F 16/30, C10M 157/04

(54) **COMPOSITION COMPRISING (PER)FLUOROPOLYETHER POLYMERS**
ZUSAMMENSETZUNG MIT (PER)FLUORPOLYETHERPOLYMEREN
COMPOSITION COMPRENANT DES POLYMÈRES DE (PER)FLUOROPOLYÉTHER

(30) Priority: 12.01.2023 EP 23151333
(43) Date of publication of application: 19.11.2025
(73) Proprietor: Syensqo Specialty Polymers Italy S.p.A., 20021 Bollate (MI) (IT)
(72) Inventor: LOTIERZO, Andrea, 20021 Bollate (MI) (IT); HAMON, Christine, 20021 Bollate (MI) (IT); SIMEONE, Giovanni, 20021 Bollate (MI) (IT)
(74) Representative: Marturano, Pasqualino
(86) International application number: PCT/EP2024/050484
(87) International publication number: WO 2024/149801

(56) References cited:
- WO-A1-2017/012909
- WO-A1-2022/078766
- WO-A1-2023/274821
- WO-A1-2023/274823
- US-A1- 2002 127 475

## Description

### Technical field

The present application claims priority filed on 12 January 2023 in Europe with Nr. 23151333.4.

### Technical field

The present invention relates to a composition comprising a (per)fluoropolyether polymer as base oil and a salt of a (per)fluoropolyether polymer as an additive, so that the composition has a volume resistivity suitable for use as lubricant.

### Background

(Per)fluoropolyether polymers (PFPEs) are a family of fluorinated synthetic fluids, which have been known for a long time and are used to formulate lubricants that function for long periods of time in extreme environments.

However, one problem with PFPE-based lubricants is that they are highly dielectric and have poor electrical conductivity. Furthermore, low polarity of the fluorinated PFPE lubricants leads to poor solubility and/or affinity with most additives. Therefore, tailoring the conductivity of PFPE lubricants has proven to be problematic because conductive additives, which are typically polar species, are immiscible with PFPE lubricants.

Accordingly, several methods have been tried in the art to tailor the conductivity of PFPE lubricants, for example as disclosed in US 2008/0144219 (in the name of HGST Netherlands BV).

Also, N Suhaila A Japar et al. (International Journal of Engineering & Technology, 7, 3.26, 2018, 23.29) in "Grease and its Application on Electrical Equipment: a Review*"* summarizes the findings in relation with the use of greases containing a PFPE as the base oil and solid particles (fumed silica or polytetrafluoroethylene - PTFE) as the thickener.
WO 2017/012909 A1 relates to the use of (per)fluoropolyether polymers as anti-foam agents in compositions based on hydrogenated or fluorinated oils. WO 2017/012909 A1 discloses compositions of a neutral perfluoropolyether base oil and perfluoropolyether (PFPE) polymers containing carboxylic acid end-groups salified with organic or inorganic counter-ions.
WO 2023/274821 A1 relates to copolymers comprising (per)fluoropolyether (PFPE) chains, in particular neutral block copolymers having increased viscosity. WO 2023/274821 A1 discloses block copolymers comprising first and second PFPE chains, each having two chain ends, wherein the PFPE chains are bonded to each other via a linking block. The copolymers are characterized by an increased complex viscosity while maintaining a low glass transition temperature.
WO 2023/274823 A1 relates to copolymers comprising (per)fluoropolyether (PFPE) chains, in particular block copolymers having increased viscosity and suitable for use as lubricants. WO 2023/274823 A1 discloses block copolymers comprising first and second PFPE chains, each having two chain ends, wherein the PFPE chains are bonded to each other via at least one linking block. The copolymers are characterized by an increased complex viscosity while maintaining suitable thermal properties.
US 2002/0127475 A1 relates to perfluoropolyether (PFPE) additives for electrochemical applications. In particular, US 2002/0127475 A1 discloses electrolytic compositions comprising a perfluoropolyether additive of defined structure, containing perfluoropolyether chains bearing sulphonate groups converted into corresponding salts with mono- or multivalent cations, such as alkali metal cations (e.g. Li⁺).

### Summary of the invention

The Applicant is aware that the presence of electrical components is continuously growing in many different industries and for a variety of applications. However, their exposure to harsh environments, including without limitation very high temperatures, moisture, and corrosion, can accelerate the failure of such electrical components. Also, such components can undergo electric arc discharge burnings, which cause burnings on the components and hence decrease their lifetime.

Hence, the Applicant faced the problem of providing a composition suitable to lubricate electrical components suitable for use in different applications and industries, such as in particular automotive and electronic industries.

Such composition needs to show good electric conductivity and hence reduced volume resistivity (also referred to as "electrical resistivity" or "electrical resistance"), good viscosity and high viscosity index ("as measured according to ASTM D227), as well as outstanding compatibility between the base oil and the additive(s).

The Applicant has surprisingly found a composition that meets the above mentioned requirements and can be hence used as such as lubricant for electrical and electronic components, including electrical connectors, switchgears and circuit breakers, as well as for mechanical components, in particular suitable for use in the automotive industry, including to lubricate parts used in electric vehicles, such as ball bearings.

Furthermore, the composition according to the present invention can be used to manufacture greases, which are suitable in the same applications.

### Disclosure of the invention

In the present application:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural form, depending on the contex-t;
- the prefix "(per)" in the term "(per)fluoropolyether" means that the polyether can be fully or partially fluorinated.

**In** a first aspect, the present invention relates to a composition [composition (COMP)] comprising:
- at least one block copolymer [PFPE copolymer] comprising a first and a second (per)fluoropolyether chain [PFPE chain] each having two chain ends, wherein the first chain end of said first and second PFPE chain comprises a perfluorinated alkyl group and the second chain end of said first and second PFPE chain are bonded to each other via:
   - at least one first block [block (1)] complying with formula (I): 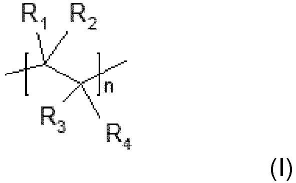 wherein
      n is 0 or an integer from 1 to 3;
      R₁ to R₄, each independently, is selected in the group comprising, preferably consisting of, fluorine atom, perfluorinated linear or branched alkyl group having from 1 to 6 carbon atoms, group of formula (II):

         (II) -(R₁₀)ₜ[C(R₁₁)(R₁₂)-C(R₁₃)(R₁₄)(R₁₅)]_{z}
      wherein
      R₁₀ is an oxygen atom, or a bi-/tri-/tetravalent perfluorinated alkyl chain comprising from 1 to 24 carbon atoms optionally interrupted by and/or comprising at least one oxygen atom,
      t is zero or 1,
      z is an integer from 1 to 3;
      R₁₁ to R₁₅, each independently, is selected in the group comprising, preferably consisting of, fluorine atom, perfluorinated linear or branched alkyl group having from 1 to 6 carbon atoms and group of formula (III):

         -[(A^)_{a^}-(B^)_{v^}-(E^)_{L^]u^}-(C^)-T (III)
      wherein
      a^ is zero or 1,
      v^ is zero or an integer from 1 to 3,
      L^ is zero or an integer from 1 to 250,
      u^ is zero or an integer from 1 to 50;
      A^ is a **PFPE** chain
      B^ is a group of formula:

         -[C(R_{1^})(R_{2^})-C(R_{3^})(R_{4^})]-
      wherein R_{1^} to R_{4^} each independently has the meaning defined above for each of R₁ to R₄,
      E^ is a group of formula -(CR_{100^}R_{101^}CR_{102^}R_{103^})-
      wherein
      R_{100^} and R_{101^} are independently selected from hydrogen atom, halogen atom, more preferably fluorine or chlorine atom, and
      R_{102^} and R_{103^} are independently selected from hydrogen atom, halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
      one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
      C^ is a PFPE chain, and
      T is a perfluorinated alkyl group;
   - at least one second block [block (2)] complying with formula (IV):

      -[(CR^{1*}R^{2*}CR^{3*}R^{4*})_{n*}-(E)_{L}]- (IV)

      wherein
      n* is zero or an integer from 1 to 250,
      L is zero or an integer from 1 to 250 and
      the sum of n* and L is 0 or from 1 to 250;
      R^{1*} and R^{2*} are independently selected from hydrogen atom, halogen atom, more preferably fluorine or chlorine atom, and
      R^{3*} and R^{4*} are independently selected from hydrogen atom, halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
      one of R^{1*} and R^{2*} and one of R^{3*} and R^{4*} are a fluorine atom and the other of R^{1*} and R^{2*} and the other of R^{3*} and R^{4*} together form a perhalogenated cyclic ring having from 4 to 6 members, optionally comprising heteroatoms, such as oxygen atoms;
      E has the same meaning provided for E^ above;
   - optionally, at least a third block [block (3)] comprising a PFPE chain;
      with the proviso that:
      in said PFPE copolymer:
         -- at least one of n, n* and L is different from 0;
         -- said block (1), said block (2) and when present said block (3) are statistically distributed;
      in said formula (I):
         -- at least one of R₁ to R₄ is a group of formula (II),
         -- one of R₁₁ or R₁₂ and one of R₁₃ to R₁₅, is a group of formula (III);
      in said formula (III) and said formula (IV)
         -- the recurring units are statistically distributed,
      in said formula (III)
         -- when a^ is 1 at least one of v^ and L^ is different from 0;
         and
   - up to 20.0 wt.% based on the total weight of composition (COMP) of at least one salt of a (per)fluoropolyether polymer [PFPE additive] comprising a (per)fluoropolyether backbone having two chain ends bonded to opposite sides of said backbone, wherein at least one chain end comprises at least one group selected from:
      (i) acid group selected from: -COO⁻, 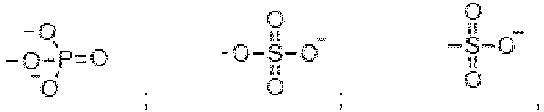 wherein said acid group is salified with at least one inorganic metal salt or with an organic group selected from ammonium salt and phosphonium salt;
      (ii) ammonium group and at least one inorganic or organic counterion; wherein the sum of said **PFPE** copolymer and said **PFPE** additive add up to 100 wt.% of composition (COMP).

**If** required by the final application, composition (COMP) according to the present invention can contain at least one additional ingredient.

Such at least one additional ingredient can be selected in the group comprising: antirust, antioxidants, rheological modifiers, corrosion inhibitors, dyes, pigments.

Each of such at least one additional ingredient can be present in an amount from 0.1 to 15 wt.% based on the total weight of composition (COMP).

Advantageously, depending on the final application, composition (COMP) can be used as lubricant without the need of adding a solid additive. Hence, according to a preferred embodiment, composition (COMP) does not contain any solid additive, more in particular any additive in the form of solid particles.

Advantageously, said PFPE copolymer has a viscosity of at least 1,000 mm²/s, measured at 20°C according to standard methods, such as ASTM D445, or with a dynamical mechanical spectrometer Anton Paar MCR 502 rheometer equipped with parallel plates 25 mm, at 1 rad/s and at 25°C.

It will be understood by those skilled in the art that said first chain end of said first and second PFPE chain correspond to the two chain ends of the PFPE copolymer.

Preferably, said first chain end of said first and second PFPE chain comprise a perfluorinated linear alkyl group having from 1 to 3 carbon atoms.

Preferably, said perfluorinated alkyl groups are the same from each other.

Preferably, said first chain end of said first and second PFPE chain and said T in formula (III), equal or different from each other, are a perfluorinated alkyl group having from 1 to 3 carbon atoms.

For example, T and T', equal to or different from each other, are a fluorine atom or a group selected from -CF₃, -CF₂CF₃, -CF₂CF₂CF₃, -CF(CF₃)₂. Other halogenated groups, such as for example -CF₂Cl and -CF₂CF₂Cl, can still be present.

Preferably, in said first and second PFPE chain, A^ and C^ are equal or different from each other.

Preferably, in the PFPE copolymer, said first PFPE chain is bonded to said block (1) via a sigma bond or a group -(C)- selected from -CF₂-, -CF₂CF₂- or - O-.

Preferably, in the PFPE copolymer, said block (2) is bonded to said second PFPE chain via a sigma bond or a group -(C)- selected from -CF₂-, -CF₂CF₂- or -O-.

Preferably, when both said block (1) and said block (2) are present, they are linked via a sigma bond.

Preferably, in the PFPE copolymer, each of said PFPE chain is a partially or fully fluorinated chain [chain (R_{f})] comprising, preferably consisting of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R(_{f-a})-Y, wherein R(_{f-a}) is a fluoropolyoxyalkene chain comprising a number of repeating units from 0 to 10, said recurring units being chosen among the followings : -CFXO- , -CF₂CFXO-, -CF₂CF₂CF₂O-, - CF₂CF₂CF₂CF₂O-, with each of each of X being independently F or CF₃ and Y being a C₁-C₃ perfluoroalkyl group.

Preferably, chain (R_{f}) complies with the following formulae (R_{f}-I) and (R_{f}-II):

(R_{f}-I) -[(CFX¹O)_{g1}(CFX²CFX³O)_{g2}(CF₂CF₂CF₂O)_{g3}(CF₂CF₂CF₂CF₂O)_{g4}]-

-wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently ≥0, such that g1 +g2+g3+g4 is in the range from 2 to 300, preferably from 10 to 250, even more preferably from 15 to 200; should at least two of g1, g2, g3 and g4 be different from zero, the different recurring units are generally statistically distributed along the chain;

   (R_{f}-II) -[(CFX¹O)_{g1}(CFX²CFX³O)_{g2}(CF₂CF₂CF₂O)_{g3}(CF₂CF₂CF₂CF₂O)_{g4}- (CF(CF₃)O)_{g5}(CF₂CF(CF₃)O)_{g6}]-

   wherein
- X¹, X², X³ are as defined above;
- g1, g2, g3, g4, g5 and g6, equal or different from each other, are independently ≥0,such that g1 +g2+g3+g4+g5+g6 is in the range from 2 to 300, preferably from 10 to 250, with the proviso that at least one of g5 and g6 are different from 0.

In a preferred embodiment, chain (R_{f}) complies with formula (R_{f}-I) above.

Preferably, in the PFPE copolymer, the sum of (n + n* + v^) is from 1 to 15, preferably from 1 to 11, more preferably from 1 to 9.

Preferably, in the PFPE copolymer, the sum of (L+L^) is from 1 to 500, preferably from 2 to 500, more preferably from 2 to 300,

According to a preferred embodiment, the PFPE copolymer comprises a first and a second PFPE chain, each having two chain ends, wherein the first chain end of said first and second PFPE chain comprises a perfluorinated alkyl group and the second chain end of said first and second PFPE chain are bonded to each other via:
- at least one block (2) complying with formula (IV):

   -[(CR¹*R²*CR³*R⁴*)_{n*}-(E)_{L}]- (IV)

   wherein
   n* is an integer from 1 to 250,
   L is an integer from 1 to 250, and
   the sum of n* and L is from 1 to 250;
   R^{1*} and R^{2*} are fluorine atom, and
   R^{3*} and R^{4*} are independently selected from halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms;
   E is a group of formula -(CR_{100^}R_{101^}CR_{102^}R_{103^})-
   wherein
   R_{100^} and R_{101^} are independently selected from halogen atom, preferably fluorine or chlorine atom, and
   R_{102^} and R_{103^} are independently selected from halogen atom, preferably fluorine or chlorine atom; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms;
      and
- optionally, at least one block (3) comprising a PFPE chain.

The PFPE copolymer can be prepared via known processes, for example as disclosed in WO 2008/065163 (SOLVAY SOLEXIS S.P.A.) or via supercritical fluid fractionation.

The PFPE copolymer can be prepared via a process [process (P)], which comprises contacting:
- at least one (per)fluoropolyether polymer comprising peroxidic groups [PFPE peroxy]; with
- at least one perfluorinated compound of formula (X-p): 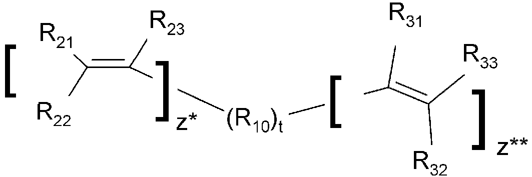 wherein
   each of R₂₁ to R₂₃ and R₃₁ to R₃₃ is independently fluorine atom, perfluorinated alkyl group having from 1 to 3 carbon atoms,
   R₁₀ is an oxygen atom, or a perfluorinated alkyl chain comprising from 2 to 18 carbon atoms, optionally and preferably interrupted by and/or comprising at least one oxygen atom,
   t is zero or 1, preferably 1;
   each of z* and z** is independently 1 or 2; and/or
- at least one compound [compound (O)] selected in the group comprising, preferably consisting of:
   (i) hydrogenated or (per)halogenated olefin comprising from 2 to 8 carbon atoms, preferably ethylene (E), propylene (PP), tetrafluoroethylene (TFE), hexafluoropropylene (HFP), chlorotrifluoroethylene (CTFE), and 1,1- difluoroethylene (VDF);
   (ii) CF₂=CFOR_{f},
      wherein
      R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁- C₆ perfluoro-alkyls; C₅-C₆ cyclic perfluoro-alkyls, and C₂-C₆ perfluoro-oxy- alkyls, comprising at least one catenary oxygen atom, preferably R_{f2} is - CF₂CF₃ (MOVE1), -CF₂CF₂OCF₃ (MOVE2), or -CF₃ (MOVE3);
   (iii) perfluorodioxoles having formula : 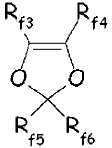
      wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃,
      in the presence of UV radiation or under heating,
      provided that the amount of the compound of formula (X-p) is less than 5 wt.% of the amount of the PFPE peroxy.

The viscosity of the PFPE copolymer can be measured using different methods depending on the viscosity of the PFPE copolymer itself.

Preferably, said PFPE copolymer has a viscosity higher than 1,000 mm²/s at 20°C, more preferably higher than 2,000 mm²/s at 20°C and even more preferably higher than 3,000 mm²/s at 20°C.

Preferably, said PFPE copolymer has a viscosity lower than 5,000,000 mm²/s at 20°C, more preferably lower than 2,500,000 mm²/s at 20°C, and even more preferably lower than 2,000,000 mm²/s at 20°C.

Preferably, said PFPE copolymer has a viscosity of from 3,000 to 1,500,000 mm²/s at 20°C, more preferably of from 3,500 to 1,000,000 mm²/s at 20°C and even more preferably of from 4,000 to 950,000 mm²/s at 20°C .

The above viscosity of the PFPE copolymer according to the present invention was measured at 0°C according to standard methods, such as ASTM D445, or with a dynamical mechanical spectrometer Anton Paar MCR 502 rheometer equipped with parallel plates 25 mm, at 1 rad/s and at 25°C.

Preferably, said PFPE additive is in an amount of at least 0.1 wt.% based on the total weight of composition (COMP).

More preferably, said PFPE additive is in an amount from 0.1 to 20.0 wt.%, even more preferably from 0.5 to 15 wt.% and still more preferably from 1.0 to 12 wt.% based on the total weight of composition (COMP).

Preferably, in the PFPE additive (i), said acid group is a carboxylic group.

Such carboxylic group can be salified with any of the inorganic metal salt or the organic salt selected from ammonium salt and phosphonium salt.

Preferably, in the PFPE additive (i), said at least one inorganic metal salt is selected from alkaline metals. More preferably, said alkaline metals are selected in the group comprising sodium, potassium, cesium, lithium, magnesium and calcium.

Preferably, in the PFPE additive (i), said organic ammonium salt is selected from those of formula: N⁺H(R₂₁)(R₂₂)(R₂₃)
wherein each of R₂₁, R₂₂, R₂₃ is selected from: linear or branched C₁-C₂₀ aliphatic chain, optionally containing at least one heteroatom, preferably -O-; or two of R₂₁, R₂₂, R₂₃ together form a 5- or 6- membered aliphatic or aromatic ring, said ring optionally containing at least one heteroatom and/or being optionally substituted by at least one linear or branched alkyl chain comprising from 1 to 10 carbon atoms and optionally containing at least one heteroatom, preferably selected from -O- and -N-, and the third of R₂₁, R₂₂, R₂₃ is as defined above.

More preferably, said organic ammonium salt is selected from triethanol ammonium, triethyl ammonium, pyridinium, trimethyl ammonium, tributyl ammonium, 1-methyl imidazolium, di(ethyl)cyclohexyl-ammonium, benz- imidazolium, 1-benzyl imidazolium.

Preferably, in the PFPE additive (ii), said ammonium group is selected from those of formula:

§-N⁺(R₃₁)(R₃₂)(R₃₃)

wherein
§ indicates the bond to the (per)fluoropolyether backbone, and
each of R₃₁, R₃₂, R₃₃ is selected from: linear or branched C₁-C₂₀ aliphatic chain, optionally containing at least one heteroatom, preferably -O-; or two of R₃₁, R₃₂, R₃₃ together form a 5- or 6- membered aliphatic or aromatic ring, said ring optionally containing at least one heteroatom and/or being optionally substituted by at least one linear or branched alkyl chain comprising from 1 to 10 carbon atoms and optionally containing at least one heteroatom,
preferably selected from -O- and -N-, and the third of R₃₁, R₃₂, R₃₃ is as defined above

More preferably, said ammonium group is selected from di(methyl)benzylammonium, di(methyl)octyl-ammonium, tri(methyl) ammonium, tri(butyl)ammonium, tri(tert-butyl)ammonium, di(cyclohexane) methylammonium, tri(pentyl)ammonium, di(ethyl)cyclohexylammonium, di-(butyl)methylammonium, di(ethyl)butyl-ammonium, 1-butyl-imidazolium, 1-methylimidazolium, 1-benzyl-imidazolium, benzimidazolium, pyridinium, pyridazinium, pyrimidinium, pyrazinium, 1,2,4-triazolium.

Preferably, in the PFPE additive (ii), said at least one inorganic or organic counterion is selected in the group comprising: Br⁻, I⁻, Cl⁻, BF₄⁻ , NO₃ , OH⁻, [(CF₃SO₂)₂N]⁻, sulfonate and sulfate.

Said sulfonate is preferably selected in the group comprising: triflate, nonaflate, mesylate and tosylate.

Preferably, said PFPE additive comprises a (per)fluoropolyether backbone complying with the following formula (II*):

-(X*)_{a*}-O-(R_{f^})-(X**)_{b*}- (II*)

wherein a* and b* equal or different from each other, are equal to or higher than 1;
X* and X**, equal to or different from each other, are selected from -CF₂-, - CF₂CF₂-, -CF(CF₃)- and -CF₂CH₂-;
R_{f^} is a fully or partially fluorinated chain comprising, preferably consisting of repeating units R°, said repeating units being independently selected from the group consisting of:
   (i) -CFXO-, wherein X is -F or -CF₃;
   (ii) -CFXCFXO-, wherein X, equal or different at each occurrence, is -F or - CF₃, with the proviso that at least one of X is -F;
   (iii) -CF₂CF₂CF₂O-;
   (iv) -CF₂CF₂CF₂CF₂O-;
   (v) -(CF₂)ⱼ-CFZ-O- wherein j is an integer from 0 to 3 and Z is a group of general formula -O-R(_{f-a})-T, wherein R(_{f-a}) is a fluoropolyoxyalkene chain comprising a number of repeating units from 0 to 10, said recurring units being chosen among the following : -CFXO- , -CF₂CFXO-, -CF₂CF₂CF₂O-, - CF₂CF₂CF₂CF₂O-, with each of X being independently -F or -CF₃ and T being a C₁-C₃ perfluoroalkyl alkyl chain.

Preferably, chain (R_{f^}) complies with the following formula:

(R_{f*}-I) -[(CFX¹O)_{g1}(CFX²CFX³O)_{g2}(CF₂CF₂CF₂O)_{g3}(CF₂CF₂CF₂CF₂O)_{g4}]-

-wherein
- X¹ is independently selected from -F and -CF₃,
- X², X³, equal or different from each other and at each occurrence, are independently -F, -CF₃, with the proviso that at least one of X is -F;
- g1, g2 , g3, and g4, equal or different from each other, are independently integers ≥0,such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f^}) is selected from chains of formula:

(R_{f^}-IIA) -[(CF₂CF₂O)ₐ₁(CF₂O)ₐ₂]-

-wherein:
- a1 and a2 are independently integers ≥ 0 such that the number average molecular weight is between 400 and 100,000, preferably between 400 and 50,000; both a1 and a2 are preferably different from zero, with the ratio a1/a2 being preferably comprised between 0.1 and 10;

   (R_{f^}-IIB) -[(CF₂CF₂O)_{b1}(CF₂O)_{b2}(CF(CF₃)O)_{b3}(CF₂CF(CF₃)O)_{b4}]-

   -wherein:
   b1, b2, b3, b4, are independently integers ≥ 0 such that the number average molecular weight is between 400 and 100,000, preferably between 400 and 50,000; preferably each of b1, b2, b3, b4 are > 0;

   (R_{f ^}-IIC) -[(CF₂CF₂O)_{c1}(CF₂O)_{c2}(CF₂(CF₂)_{cw}CF₂O)_{c3}]-

   -wherein:
   cw = 1 or 2;
   c1, c2, and c3 are independently integers ≥ 0 chosen so that the number average molecular weight is between 400 and 100,000, preferably between 400 and 50,000; preferably c1, c2 and c3 are all > 0, with the ratio c3/(c1+c2) being generally lower than 0.2.

Still more preferably, chain (R_{f^}) complies with one of formulae:

(R_{f ^}-IIA) -[(CF₂CF₂O)ₐ₁(CF₂O)ₐ₂]-

-wherein:
- a1, and a2 are integers > 0 such that the number average molecular weight is between 400 and 100,000, preferably between 400 and 50,000, with the ratio a1/a2 being generally between 0.1 and 10, more preferably between 0.2 and 5; or

   (R_{f ^}-IIB) -[(CF₂CF₂O)_{b1}(CF₂O)_{b2}(CF(CF₃)O)_{b3}(CF₂CF(CF₃)O)_{b4}]-

   -wherein:
   b1, b2, b3, b4, are independently integers ≥ 0 such that the number average molecular weight is between 400 and 100,000, preferably between 400 and 50,000; preferably each of b1, b2, b3, b4 are > 0.

According to an embodiment, said PFPE additive (i) comprises at one chain end or at both chain ends, a carboxyl group salified with at least one inorganic metal salt. Said at least one inorganic metal salt is as defined above.

Preferably, said PFPE additive comprises, at one chain end or at both chain ends, a carboxyl group salified with at least one organic ammonium salt. Said at least one organic ammonium salt is as defined above.

More preferably, said PFPE additive comprises at one chain end a salified carboxyl group as defined herein above and at the other chain end a neutral group.

Such neutral group is preferably fluorine atom or a perfluorinated alkyl chain comprising 1 to 6 carbon atoms.

According to this embodiment, the chain end comprising an acid group is preferably bonded to the (per)fluoropolyether backbone complying with formula (R_{f^}) as defined above via a group of formula -CF₂- or -CF(CF₃)-.

The PFPE additive (i) can be prepared according to methods known in the art, such as following the procedure disclosed in US 5,000,864 (Ausimont S.p.A.).

According to another embodiment, said PFPE additive (ii) comprises at one chain end or both chain ends, an ammonium group and at least one inorganic or organic counterion.

Preferably, said ammonium group is as defined above.

Preferably, said at least one inorganic or organic counterion is as defined above.

According to this second embodiment, the chain end comprising an ammonium group is preferably bonded to the (per)fluoropolyether backbone complying with formula (R_{f}) as defined above via a group of formula -CF₂- or - CF₂CH₂-.

Also, according to this second embodiment, the chain end comprising an ammonium group is preferably bonded to said sigma bond or group (B1) via an alkoxylated chain [chain (Rₐ)].

Preferably, said chain (Rₐ) complies with one of the following formulae (Rₐ-₁) to (Rₐ-_{III}):

(Rₐ-_{I}) -(OCH₂CH₂)ⱼ₁-H

(Rₐ-_{II}) -[OCH(CH₃)CH₂]j₂-H

(Rₐ-_{III}) -[(OCH₂CH₂)ⱼ₃-(OCH(CH₃)CH₂)ⱼ₄]ⱼ(ₓ)-H

wherein j1 and j2, each independently, are an integer from 1 to 10, more preferably from 1 to 5;
j3, j4 and j(x) are integers from 1 to 25, and the sum of j3 and j4 is from 2 to 50.

The PFPE additive (ii) can be prepared according to methods known in the art, such as following the method disclosed in WO 2022/078766 (Solvay Specialty Polymers Italy S.p.A.).

In a further object, the present invention relates to the use of said composition (COMP) as lubricant for electrical components suitable for use in different applications and industries, such as in particular automotive and electronic industries. Such components include, electrical and electronic components, such - without limitation - electrical connectors, switchgears and circuit breakers.

In still a further object, the present invention relates to the use of said composition (COMP) as lubricant for mechanical components, suitable for use in the automotive industry, in particular for electric vehicles (EV) . Such components include - without limitations - ball bearings.

In still a further object, the present invention relates to the use of composition (COMP) according to the present invention for the manufacture of a grease.

In another object, the present invention relates to a grease comprising composition (COMP) according to the present invention and at least one other ingredient.

Such grease can be advantageously used as lubricant for electrical, electronic or mechanical components. Examples of such components are provided above and include - without limitation - electrical connectors, switchgears and circuit breakers, as well as ball bearings.

Should the disclosure of any patents, patent applications, and publications conflict with the description of the present application to the extent that it may render a term unclear, the present description shall take precedence.

The present invention will be now described in more detail with reference to the following examples, whose purpose is merely illustrative and not intended to limit the scope of the disclosure.

### EXAMPLES

### Materials

COMP1: Cyphos IL-169 from Solvay Technology Solutions (hydrogenated liquid additive) was used as comparison.

COMP2: Silver micropowder purchased from Sigma Aldrich (solid particle size = 5-8 µm) was also used as a comparison.

ADD1: triflate salt of 1-butyl imidazolium monofunctional PFPE comprising a backbone of formula -(CF₂CF₂O)ₘ(CF₂O)ₙ- and having a Mw = 2520 g/mol as measured by Nuclear Magnetic Resonance (NMR) Spectroscopy.

ADD2: triflate salt of 1-butyl imidazolium monofunctional PFPE comprising a backbone of formula -(CF₂CF₂O)ₘ(CF₂O)ₙ- and having a Mw = 4760 g/mol as measured by NMR.

ADD3: triflate salt of 1-benzyl imidazolium monofunctional PFPE comprising a backbone of formula -(CF₂CF₂O)ₘ(CF₂O)ₙ- and having a Mw = 2580 g/mol as measured by NMR.

ADD4: triethanolamine salt of a mixture of neutral, mono and bi-functional PFPE having the backbone of formula -[CF₂CF(CF₃)O]ₙ-(CF₂O)_{g}-[CF(CF₃)O]_{g}- and comprising at its chain ends the groups of formula: -OCF₂COO⁻, - OCF(CF₃)COO⁻, -OCF₂C(=O)CF₃, -OCF₃.

Fomblin(R) HV25 is commercially available from Solvay Specialty Polymers Italy S.p.A. having a viscosity = 25000 mm²/s measured at 25°C.

Compositions of comparison and according to the present invention were prepared by mixing the ingredients detailed in Table 1 hereinafter.

**Table 1**

| Example No. | Base oil | Additive | **Concentration** (wt. %) |
|---|---|---|---|
| 1 C(*) | Fomblin(^{R}) HV | COMP1 | 5 |
| 2C(*) | Fomblin(^{R}) HV | COMP2 | 5 |
| 3 | Fomblin(^{R}) HV | ADD4 | 5 |
| 4 | Fomblin(^{R}) HV | ADD1 | 2 |
| 5 | Fomblin(^{R}) HV | ADD2 | 2 |
| 6 | Fomblin(^{R}) HV | ADD2 | 5 |
| 7 | Fomblin(^{R}) HV | ADD3 | 2 |
| 8C(*) | Fomblin(^{R}) HV | none | |
| 9 | Fomblin(^{R}) HV | ADD4 | 10.0 |
| 10 | Fomblin(^{R}) HV | ADD4 | 0.5 |

| | | | |
|---|---|---|---|
| (*) comparison | | | |

The additive used in composition of Example 1C was not soluble in Fomblin(^{R}) HV, and hence such composition was no further tested.

The other compositions were evaluated for their volume resistivity at two different temperatures, i.e. 25°C and 80 °C, following ASTM D257. A voltage of 500 V was applied and the measured value was registered after 60 sec.

**Table 2**

| Example No. | Volume resistivity @25°C (Ωcm) | Volume resistivity @80°C (Ωcm) |
|---|---|---|
| 2C(*) | 6x10¹⁵ | n/p |
| 3 | 3x10¹⁵ | 3x10¹⁵ |
| 4 | 3x10¹⁴ | 9x10¹⁴ |
| 5 | 1x10¹⁵ | 2x10¹⁴ |
| 6 | 2x10¹⁴ | 1x10¹⁴ |
| 7 | 1x10¹⁵ | 5x10¹⁴ |
| 8C(*) | 2x10¹⁵ | 4x10¹⁵ |
| 9 | 3x10¹⁵ | 2x10¹³ |
| 10 | 2x10¹⁵ | 3x10¹⁵ |

| | | |
|---|---|---|
| (*) comparison | | |

The comparative composition of Example 2C comprising solid particles showed a higher volume resistivity compared to the compositions according to the present invention.

The comparative composition of Example 2C was also evaluated for its shelf life: separation between two phases was observed by visual inspection after four days.

The compositions according to the present invention showed a volume resistivity lower than comparative composition 2C at 25°C and also lower than comparative composition 8C at 80°C.

## Claims

1. A composition [composition (COMP)] comprising:
- at least one block copolymer [PFPE copolymer] comprising a first and a second (per)fluoropolyether chain [PFPE chain] each having two chain ends, wherein the first chain end of said first and second PFPE chain comprises a perfluorinated alkyl group and the second chain end of said first and second PFPE chain are bonded to each other via:
- at least one first block [block (1)] complying with formula (I): 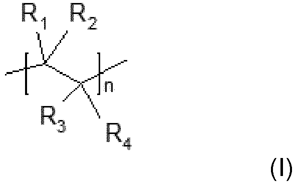 wherein
n is 0 or an integer from 1 to 3;
R₁ to R₄, each independently, is selected in the group comprising, preferably consisting of, fluorine atom, perfluorinated linear or branched alkyl group having from 1 to 6 carbon atoms, group of formula (II):
(II) -(R₁₀)ₜ[C(R₁₁)(R₁₂)-C(R₁₃)(R₁₄)(R₁₅)]_{z}
wherein
R₁₀ is an oxygen atom, or a bi-/tri-/tetravalent perfluorinated alkyl chain comprising from 1 to 24 carbon atoms optionally interrupted by and/or comprising at least one oxygen atom,
t is zero or 1,
z is an integer from 1 to 3;
R₁₁ to R₁₅, each independently, is selected in the group comprising, preferably consisting of, fluorine atom, perfluorinated linear or branched alkyl group having from 1 to 6 carbon atoms and group of formula (III):
-[(A^)_{a^}-(B^)_{v^}-(E^)_{L^}]_{u^}-(C^)-T (III)
wherein
a^ is zero or 1,
v^ is zero or an integer from 1 to 3,
L^ is zero or an integer from 1 to 250,
u^ is zero or an integer from 1 to 50;
A^ is a PFPE chain
B^ is a group of formula:
-[C(R_{1^})(R_{2^})-C(R_{3^})(R_{4^})]-
wherein R_{1^} to R_{4^} each independently has the meaning defined above for each of R₁ to R₄,
E^ is a group of formula -(CR_{100^}R_{101^}CR_{102^}R_{103^})-
wherein
R_{100^} and R_{101^} are independently selected from hydrogen atom, halogen atom, more preferably fluorine or chlorine atom, and
R_{102^} and R_{103^} are independently selected from hydrogen atom, halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
C^ is a PFPE chain, and
T is a perfluorinated alkyl group;
- at least one second block [block (2)] complying with formula (IV):
-[(CR^{1*}R^{2*}CR^{3*}R^{4*})_{n*}-(E)_{L}]- (IV)
wherein
n* is zero or an integer from 1 to 250,
L is zero or an integer from 1 to 250 and
the sum of n* and L is 0 or from 1 to 250;
R^{1*} and R^{2*} are independently selected from hydrogen atom, halogen atom, more preferably fluorine or chlorine atom, and
R^{3*} and R^{4*} are independently selected from hydrogen atom, halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R^{1*} and R^{2*} and one of R^{3*} and R^{4*} are a fluorine atom and the other of R^{1*} and R^{2*} and the other of R^{3*} and R^{4*} together form a perhalogenated cyclic ring having from 4 to 6 members, optionally comprising heteroatoms, such as oxygen atoms;
E has the same meaning provided for E^ above;
- optionally, at least a third block [block (3)] comprising a PFPE chain;
with the proviso that:
in said PFPE copolymer:
-- at least one of n, n* and L is different from 0;
-- said block (1), said block (2) and when present said block (3) are statistically distributed;
in said formula (I):
-- at least one of R₁ to R₄ is a group of formula (II),
-- one of R₁₁ or R₁₂ and one of R₁₃ to R₁₅, is a group of formula (III);
in said formula (III) and said formula (IV)
-- the recurring units are statistically distributed,
in said formula (III)
-- when a^ is 1 at least one of v^ and L^ is different from 0;
and
- up to 20.0 wt.% based on the total weight of composition (COMP) of at least one salt of a (per)fluoropolyether polymer [PFPE additive] comprising a (per)fluoropolyether backbone having two chain ends bonded to opposite sides of said backbone, wherein at least one chain end comprises at least one group selected from:
(i) acid group selected from: -COO⁻, -OSO₃²⁻, -OPO₃²-, -SO₃-,
wherein said acid group is salified with at least one inorganic metal salt or with an organic salt selected from ammonium salt and phosphonium salt;
(ii) ammonium group and at least one inorganic or organic counterion; wherein the sum of said PFPE copolymer and said PFPE additive add up to 100 wt.% of composition (COMP).

2. The composition (COMP) according to Claim 1, said composition (COMP) containing at least one additional ingredient, preferably selected in the group comprising: antirust, antioxidants, rheological modifiers, corrosion inhibitors, dyes, pigments.

3. The composition (COMP) according to Claims 1 or 2, said composition (COMP) being free from additive(s) in the form of solid particles.

4. The composition (COMP) according to any one of the preceding Claims, wherein said PFPE copolymer has a viscosity of at least 1,000 mm²/s, measured at 20°C according to standard methods, such as ASTM D445, or with a dynamical mechanical spectrometer Anton Paar MCR 502 rheometer equipped with parallel plates 25 mm, at 1 rad/s and at 25°C.

5. The composition (COMP) according to any one of the preceding Claims, wherein said first chain end of said first and second PFPE chain comprise a perfluorinated linear alkyl group having from 1 to 3 carbon atoms.

6. The composition (COMP) according to any one of the preceding Claims, wherein:
- said first PFPE chain is bonded to said block (1) via a sigma bond or a group -(C)- selected from -CF₂-, -CF₂CF₂- or -O-; and/or
- said block (2) is bonded to said second PFPE chain via a sigma bond or a group -(C)- selected from -CF₂-, -CF₂CF₂- or -O-; and/or
- when both said block (1) and said block (2) are present, they are linked via a sigma bond.

7. The composition (COMP) according to any one of the preceding Claims, wherein each of said PFPE chain is a partially or fully fluorinated chain [chain (R_{f})] comprising, preferably consisting of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R(_{f-a})-Y, wherein R(_{f-a}) is a fluoropolyoxyalkene chain comprising a number of repeating units from 0 to 10, said recurring units being chosen among the followings : -CFXO- , -CF₂CFXO-, -CF₂CF₂CF₂O-, - CF₂CF₂CF₂CF₂O-, with each of each of X being independently F or CF₃ and Y being a C₁-C₃ perfluoroalkyl group.

8. The composition (COMP) according to any one of the preceding Claims, wherein said PFPE copolymer comprises a first and a second PFPE chain, each having two chain ends, wherein the first chain end of said first and second PFPE chain comprises a perfluorinated alkyl group and the second chain end of said first and second PFPE chain are bonded to each other via:
- at least one block (2) complying with formula (IV):
-[(CR^{1*}R^{2*}CR^{3*}R^{4*})n*-(E)_{L}]- (IV)
wherein
n* is an integer from 1 to 250,
L is an integer from 1 to 250, and
the sum of n* and L is from 1 to 250;
R^{1*} and R^{2*} are fluorine atom, and
R^{3*} and R^{4*} are independently selected from halogen atom, more preferably fluorine or chlorine atom; linear or branched alkyl chain comprising from 1 to 6 carbon atoms, optionally containing at least one heteroatom selected from O, N and S; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms;
E is a group of formula -(CR_{100^}R_{101^}CR_{102^}R₁0_{3^})-
wherein
R_{100^} and R_{101^} are independently selected from halogen atom, preferably fluorine or chlorine atom, and
R_{102^} and R_{103^} are independently selected from halogen atom, preferably fluorine or chlorine atom; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms;
and
- optionally, at least one block (3) comprising a PFPE chain.

9. The composition (COMP) according to any one of the preceding Claims, wherein said PFPE additive is in an amount of at least 0.1 wt.% and up to 20.0 wt.% based on the total weight of composition (COMP).

10. The composition (COMP) according to any one of the preceding Claims, wherein in the PFPE additive (i):
- said acid group is a carboxylic group salified with an inorganic metal salt or the organic salt selected from ammonium salt and phosphonium salt; or
- said organic ammonium salt is selected from those of formula:
N⁺H(R₂₁)(R₂₂)(R₂₃)
wherein each of R₂₁, R₂₂, R₂₃ is selected from: linear or branched C₁-C₂₀ aliphatic chain, optionally containing at least one heteroatom; or two of R₂₁, R₂₂, R₂₃ together form a 5- or 6- membered aliphatic or aromatic ring, said ring optionally containing at least one heteroatom and/or being optionally substituted by at least one linear or branched alkyl chain comprising from 1 to 10 carbon atoms and optionally containing at least one heteroatom, and the third of R₂₁, R₂₂, R₂₃ is as defined above.

11. The composition (COMP) according to any one of the preceding Claims, wherein in the PFPE additive (ii):
- said ammonium group is selected from those of formula:
§-N⁺(R₃₁)(R₃₂)(R₃₃)
wherein
§ indicates the bond to the (per)fluoropolyether backbone, and
each of R₃₁, R₃₂, R₃₃ is selected from: linear or branched C₁-C₂₀ aliphatic chain, optionally containing at least one heteroatom; or two of R₃₁, R₃₂, R₃₃ together form a 5- or 6- membered aliphatic or aromatic ring, said ring optionally containing at least one heteroatom and/or being optionally substituted by at least one linear or branched alkyl chain comprising from 1 to 10 carbon atoms and optionally containing at least one heteroatom, and the third of R₃₁, R₃₂, R₃₃ is as defined above; and
- said at least one inorganic or organic counterion is selected in the group comprising: Br⁻, I⁻, Cl⁻, BF₄⁻ , NO₃⁻ , OH⁻, [(CF₃SO₂)₂N]⁻, sulfonate and sulfate.

12. The composition (COMP) according to any one of Claims 9 to 11, wherein said PFPE additive (ii) comprises a (per)fluoropolyether backbone complying with the following formula (II*):
-(X*)a*-O-(R_{f^})-(X**)_{b*}- (II*)
wherein a* and b* equal or different from each other, are equal to or higher than 1;
X* and X**, equal to or different from each other, are selected from -CF₂-, - CF₂CF₂-, -CF(CF₃)- and -CF₂CH₂-;
R_{f^} is a fully or partially fluorinated chain comprising, preferably consisting of repeating units R°, said repeating units being independently selected from the group consisting of:
(i) -CFXO-, wherein X is -F or -CF₃;
(ii) -CFXCFXO-, wherein X, equal or different at each occurrence, is -F or -CF₃, with the proviso that at least one of X is -F;
(iii) -CF₂CF₂CF₂O-;
(iv) -CF₂CF₂CF₂CF₂O-;
(v) -(CF₂)ⱼ-CFZ-O- wherein j is an integer from 0 to 3 and Z is a group of general formula -O-R(_{f}-ₐ)-T, wherein R(_{f-a}) is a fluoropolyoxyalkene chain comprising a number of repeating units from 0 to 10, said recurring units being chosen among the following : -CFXO- , -CF₂CFXO-, -CF₂CF₂CF₂O-, - CF₂CF₂CF₂CF₂O-, with each of X being independently -F or -CF₃ and T being a C₁-C₃ perfluoroalkyl alkyl chain.

13. Use of composition (COMP) according to any one of Claims 1 to 12 as lubricant for:
- electrical components, preferably selected in the group comprising: electrical connectors, switchgears and circuit breakers; and/or
- mechanical components, preferably selected from ball bearings.

14. A grease comprising composition (COMP) as defined in any one of Claims 1 to 12.

## Patentansprüche

1. Zusammensetzung [Zusammensetzung (COMP)] umfassend:
- wenigstens ein Blockcopolymer [PFPE-Copolymer] umfassend eine erste und eine zweite (Per)fluorpolyetherkette [PFPE-Kette], die jeweils zwei Kettenenden aufweisen, wobei das erste Kettenende der ersten und der zweiten PFPE-Kette eine perfluorierte Alkylgruppe umfasst und das zweite Kettenende der ersten und der zweiten PFPE-Kette aneinander gebunden sind über:
- wenigstens einen ersten Block [Block (1)], der Formel (I) entspricht: 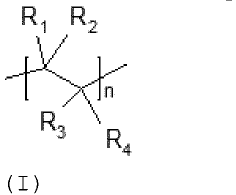 wobei
n 0 oder eine ganze Zahl von 1 bis 3 ist;
R₁ bis R₄ jeweils unabhängig ausgewählt sind aus der Gruppe umfassend, vorzugsweise bestehend aus, Fluoratom, perfluorierte lineare oder verzweigte Alkylgruppe mit 1 bis 6 Kohlenstoffatomen, Gruppe der Formel (II):
(II) - (R₁₀)t[C(R₁₁)(R₁₂)-C(R₁₃)(R₁₄)(R₁₅)]_{z}
wobei
R₁₀ ein Sauerstoffatom oder eine bi-/tri-/tetravalente perfluorierte Alkylkette mit 1 bis 24 Kohlenstoffatomen ist, gegebenenfalls unterbrochen durch und/oder umfassend wenigstens ein Sauerstoffatom,
t null oder 1 ist,
z eine ganze Zahl von 1 bis 3 ist;
R₁₁ bis R₁₅ jeweils unabhängig ausgewählt ist aus der Gruppe umfassend, vorzugsweise bestehend aus, Fluoratom, perfluorierte lineare oder verzweigte Alkylgruppe mit 1 bis 6 Kohlenstoffatomen und Gruppe der Formel (III):
-[(A^)_{a^}-(B^)_{v^}-(E^)_{L^}]_{u^}-(C^)-T (III)
wobei
a^ null oder 1 ist,
v^ null oder eine ganze Zahl von 1 bis 3 ist,
L^ null oder eine ganze Zahl von 1 bis 250 ist,
u^ null oder eine ganze Zahl von 1 bis 50 ist;
A^ eine PFPE-Kette ist,
B^ eine Gruppe ist der Formel:
-[C(R_{1^})(R_{2^})-C(R_{3^})(R_{4^})]-
wobei R_{1^} bis R_{4^} jeweils unabhängig die oben für jedes von R₁ bis R₄ definierte Bedeutung haben,
E^ eine Gruppe der Formel -(CR_{100^}R_{101^}CR_{102^}R_{103^})- ist,
wobei
R_{100^} und R_{101^} unabhängig ausgewählt sind aus Wasserstoffatom, Halogenatom, bevorzugter Fluor- oder Chloratom, und
R_{102^} und R_{103^} unabhängig ausgewählt sind aus Wasserstoffatom, Halogenatom, bevorzugter Fluor- oder Chloratom; lineare oder verzweigte Alkylkette mit 1 bis 6 Kohlenstoffatomen, gegebenenfalls enthaltend wenigstens ein Heteroatom ausgewählt aus O, N und S; OR₂₀₀, wobei R₂₀₀ eine lineare oder verzweigte perfluorierte Kette mit 1 bis 6 Kohlenstoffatomen oder eine Gruppe der Formel -CF₂OR₂₀₁ ist, wobei R₂₀₁ eine perfluorierte Alkylkette mit 1 bis 6 Kohlenstoffatomen ist, gegebenenfalls unterbrochen durch ein oder mehrere Sauerstoffetheratome; oder
eines von R_{100^} und R_{101^} und eines von R_{102^} und R_{103^} ein Fluoratom ist und das andere von R_{100^} und R_{101^} und das andere von R_{102^} und R_{103^} zusammen einen perhalogenierten cyclischen Ring mit 4 bis 6 Gliedern bilden, der gegebenenfalls Heteroatome, wie z.B. Sauerstoffatome, umfasst;
C^ eine PFPE-Kette ist, und
T eine perfluorierte Alkylgruppe ist;
- wenigstens einen zweiten Block [Block (2)], der Formel (IV) entspricht:
- [(CR^{1*}R^{2*}CR^{3*}R^{4*})_{n*}-(E) _{L}]- (IV)
wobei
n* null oder eine ganze Zahl von 1 bis 250 ist,
L null oder eine ganze Zahl von 1 bis 250 ist und
die Summe von n* und L 0 oder von 1 bis 250 beträgt;
R^{1*} und R^{2*} unabhängig voneinander ausgewählt sind aus Wasserstoffatom, Halogenatom, bevorzugter Fluor- oder Chloratom, und
R^{3*} und R^{4*} unabhängig ausgewählt sind aus Wasserstoffatom, Halogenatom, bevorzugter Fluor- oder Chloratom; lineare oder verzweigte Alkylkette mit 1 bis 6 Kohlenstoffatomen, gegebenenfalls enthaltend wenigstens ein Heteroatom ausgewählt aus O, N und S; - OR₂₀₀, wobei R₂₀₀ eine lineare oder verzweigte perfluorierte Kette mit 1 bis 6 Kohlenstoffatomen oder eine Gruppe der Formel -CF₂OR₂₀₁ ist, wobei R₂₀₁ eine perfluorierte Alkylkette mit 1 bis 6 Kohlenstoffatomen ist, gegebenenfalls unterbrochen durch ein oder mehrere Sauerstoffetheratome; oder
eines von R^{1*} und R^{2*} und eines von R^{3*} und R^{4*} ein Fluoratom ist und das andere von R^{1*} und R^{2*} und das andere von R^{3*} und R^{4*} zusammen einen perhalogenierten cyclischen Ring mit 4 bis 6 Gliedern bilden, der gegebenenfalls Heteroatome, wie z.B. Sauerstoffatome, umfasst;
E die gleiche Bedeutung wie vorstehend für E^ gegeben aufweist;
- gegebenenfalls wenigstens einen dritten Block [Block (3)], der eine PFPE-Kette umfasst;
mit der Maßgabe, dass:
in dem PFPE-Copolymer:
-- wenigstens eines von n, n* und L von 0 verschieden ist;
-- der Block (1), der Block (2) und, wenn vorhanden, der Block (3) statistisch verteilt sind;
in der Formel (I):
-- wenigstens eines von R₁ bis R₄ eine Gruppe der Formel (II) ist,
-- eines von R₁₁ oder R₁₂ und eines von R₁₃ bis R₁₃ eine Gruppe der Formel (III) ist;
in der Formel (III) und der Formel (IV)
-- die Wiederholungseinheiten statistisch verteilt sind,
in der Formel (III)
-- wenn a^ 1 ist, wenigstens eines von ν^ und L^ von 0 verschieden ist;
und
- bis zu 20,0 Gew.-%, bezogen auf das Gesamtgewicht der Zusammensetzung (COMP), an wenigstens einem Salz eines (Per)fluorpolyetherpolymers [PFPE-Additiv], umfassend ein (Per)fluorpolyethergerüst mit zwei Kettenenden, die an gegenüberliegende Seiten des Gerüsts gebunden sind, wobei wenigstens ein Kettenende wenigstens eine Gruppe umfasst, die ausgewählt ist aus:
(i) Säuregruppe ausgewählt aus: -COO⁻, -OSO₃²⁻, -OPO₃²⁻, -SO₃⁻,
wobei die Säuregruppe mit wenigstens einem anorganischen Metallsalz oder mit einem organischen Salz ausgewählt aus Ammoniumsalz und Phosphoniumsalz versalzt ist;
(ii) Ammoniumgruppe und wenigstens ein anorganisches oder organisches Gegenion;
wobei sich die Summe des PFPE-Copolymers und des PFPE-Additivs auf 100 Gew.-% der Zusammensetzung (COMP) addiert.

2. Zusammensetzung (COMP) nach Anspruch 1, wobei die Zusammensetzung (COMP) wenigstens einen zusätzlichen Inhaltsstoff enthält, vorzugsweise ausgewählt aus der Gruppe umfassend: Rostschutzmittel, Antioxidationsmittel, Rheologiemodifikatoren, Korrosionshemmer, Farbstoffe, Pigmente.

3. Zusammensetzung (COMP) nach Anspruch 1 oder 2, wobei die Zusammensetzung (COMP) frei von Additiv(en) in der Form von festen Partikeln ist.

4. Zusammensetzung (COMP) nach einem der vorstehenden Ansprüche, wobei das PFPE-Copolymer eine Viskosität von wenigstens 1.000 mm²/s aufweist, gemessen bei 20 °C nach Standardverfahren, wie z.B. ASTM D445, oder mit einem dynamischen mechanischen Spektrometer Anton Paar MCR 502 Rheometer, ausgestattet mit parallelen Platten 25 mm, bei 1 rad/s und 25 °C.

5. Zusammensetzung (COMP) nach einem der vorstehenden Ansprüche, wobei das erste Kettenende der ersten und der zweiten PFPE-Kette eine perfluorierte lineare Alkylgruppe mit 1 bis 3 Kohlenstoffatomen umfasst.

6. Zusammensetzung (COMP) nach einem der vorstehenden Ansprüche, wobei:
- die erste PFPE-Kette über eine Sigma-Bindung oder eine Gruppe -(C)- ausgewählt aus -CF₂-, -CF₂CF₂- oder -O-an den Block (1) gebunden ist; und/oder
- der Block (2) über eine Sigma-Bindung oder eine Gruppe -(C)- ausgewählt aus -CF₂-, -CF₂CF₂- oder -O- an die zweite PFPE-Kette gebunden ist; und/oder
- wenn sowohl der Block (1) als auch der Block (2) vorhanden sind, sie über eine Sigma-Bindung verknüpft sind.

7. Zusammensetzung (COMP) nach einem der vorstehenden Ansprüche, wobei jede der PFPE-Ketten eine teilweise oder vollständig fluorierte Kette [Kette (R_{f})] ist, die vorzugsweise aus Wiederholungseinheiten R° besteht, wobei die Wiederholungseinheiten unabhängig ausgewählt sind aus der Gruppe bestehend aus:
(i) -CFXO-, wobei X F oder CF₃ ist;
(ii) -CFXCFXO-, wobei X bei jedem Auftreten gleich oder verschieden F oder CF₃ ist, mit der Maßgabe, dass wenigstens eines von X -F ist;
(iii) -CF₂CF₂CW₂O-, wobei jedes von W gleich oder verschieden voneinander F, Cl, H ist;
(iv) -CF₂CF₂CF₂CF₂O-;
(v) -(CF₂)_{w}-CFZ-O-, wobei w eine ganze Zahl von 0 bis 3 ist und Z eine Gruppe der allgemeinen Formel -O-R(_{f-A})-Y ist, wobei R(_{f-a}) eine Fluoropolyoxyalkenkette ist, die eine Anzahl von Wiederholungseinheiten von 0 bis 10 umfasst, wobei die Wiederholungseinheiten ausgewählt sind aus den folgenden : -CFXO-, -CF₂CFXO-, -CF₂CF₂CF₂O-, -CF₂CF₂CF₂CF₂O-, wobei jedes X unabhängig F oder CF₃ ist und Y eine C₁-C₃-Perfluoralkylgruppe ist.

8. Zusammensetzung (COMP) nach einem der vorstehenden Ansprüche, wobei das PFPE-Copolymer eine erste und eine zweite PFPE-Kette umfasst, die jeweils zwei Kettenenden aufweisen, wobei das erste Kettenende der ersten und der zweiten PFPE-Kette eine perfluorierte Alkylgruppe umfasst und das zweite Kettenende der ersten und der zweiten PFPE-Kette aneinander gebunden sind über:
- wenigstens einen Block (2), der Formel (IV) entspricht:
- [(CR^{1*}R^{2*}CR^{3*}R^{4*})_{n*}-(E)_{L}]- (IV)
wobei
n* eine ganze Zahl von 1 bis 250 ist,
L eine ganze Zahl von 1 bis 250 ist, und
die Summe von n* und L von 1 bis 250 beträgt;
R^{1*} und R^{2*} Fluoratom sind, und
R^{3*} und R^{4*} unabhängig ausgewählt sind aus Halogenatom, bevorzugter Fluor- oder Chloratom; lineare oder verzweigte Alkylkette mit 1 bis 6 Kohlenstoffatomen, gegebenenfalls enthaltend wenigstens ein Heteroatom ausgewählt aus O, N und S; -OR₂₀₀, wobei R₂₀₀ eine lineare oder verzweigte perfluorierte Kette mit 1 bis 6 Kohlenstoffatomen oder eine Gruppe der Formel -CF₂OR₂₀₁ ist, wobei R₂₀₁ eine perfluorierte Alkylkette mit 1 bis 6 Kohlenstoffatomen ist, gegebenenfalls unterbrochen durch ein oder mehrere Sauerstoffetheratome;
E eine Gruppe der Formel -(CR_{100^}R_{101^}CR_{102^}R_{103^})- ist, wobei
R_{100^} und R_{101^} unabhängig ausgewählt sind aus Halogenatom, vorzugsweise Fluor- oder Chloratom, und
R_{102^} und R_{103^} unabhängig ausgewählt sind aus Halogenatom, vorzugsweise Fluor- oder Chloratom; -OR₂₀₀, wobei R₂₀₀ eine lineare oder verzweigte perfluorierte Kette umfassend 1 bis 6 Kohlenstoffatome oder eine Gruppe der Formel - CF₂OR₂₀₁ ist, wobei R₂₀₁ eine perfluorierte Alkylkette mit 1 bis 6 Kohlenstoffatomen ist, gegebenenfalls unterbrochen durch ein oder mehrere Sauerstoffetheratome;
und
- gegebenenfalls wenigstens einen Block (3), der eine PFPE-Kette umfasst.

9. Zusammensetzung (COMP) nach einem der vorstehenden Ansprüche, wobei das PFPE-Additiv in einer Menge von wenigstens 0,1 Gew.-% und bis zu 20,0 Gew.-%, bezogen auf das Gesamtgewicht der Zusammensetzung (COMP), vorliegt.

10. Zusammensetzung (COMP) nach einem der vorstehenden Ansprüche, wobei in dem PFPE-Additiv (i):
- die Säuregruppe eine Carboxylgruppe ist, die mit einem anorganischen Metallsalz oder dem organischen Salz ausgewählt aus Ammoniumsalz und Phosphoniumsalz versalzt ist; oder
- das organische Ammoniumsalz ausgewählt ist aus jenen der Formel:
N⁺H (R₂₁) (R₂₂) (R₂₃)
wobei jedes von R₂₁, R₂₂, R₂₃ ausgewählt ist aus: linearer oder verzweigter aliphatischer C₁-C₂₀-Kette, gegebenenfalls enthaltend wenigstens ein Heteroatom; oder zwei von R₂₁, R₂₂, R₂₃ zusammen einen 5- oder 6-gliedrigen aliphatischen oder aromatischen Ring bilden, wobei der Ring gegebenenfalls wenigstens ein Heteroatom enthält und/oder gegebenenfalls mit wenigstens einer linearen oder verzweigten Alkylkette mit 1 bis 10 Kohlenstoffatomen substituiert ist und gegebenenfalls wenigstens ein Heteroatom enthält, und das dritte von R₂₁, R₂₂, R₂₃ wie oben definiert ist.

11. Zusammensetzung (COMP) nach einem der vorstehenden Ansprüche, wobei in dem PFPE-Additiv (ii):
- die Ammoniumgruppe ausgewählt ist aus jenen der Formel:
§-N⁺ (R₃₁) (R₃₂) (R₃₃)
wobei
§ die Bindung an das (Per)fluorpolyethergerüst anzeigt, und
jedes von R₃₁, R₃₂, R₃₃ ausgewählt ist aus: linearer oder verzweigter aliphatischer C₁-C₂₀-Kette, gegebenenfalls enthaltend wenigstens ein Heteroatom; oder zwei von R₃₁, R₃₂, R₃₃ zusammen einen 5- oder 6-gliedrigen aliphatischen oder aromatischen Ring bilden, wobei der Ring gegebenenfalls wenigstens ein Heteroatom enthält und/oder gegebenenfalls mit wenigstens einer linearen oder verzweigten Alkylkette mit 1 bis 10 Kohlenstoffatomen substituiert ist und gegebenenfalls wenigstens ein Heteroatom enthält, und das dritte von R₃₁, R₃₂, R₃₃ wie oben definiert ist; und
- das wenigstens eine anorganische oder organische Gegenion ausgewählt ist aus der Gruppe umfassend: Br⁻, I⁻ , Cl⁻, BF₄⁻, NO₃⁻, OH⁻, [(CF₃SO₂)₂N]⁻, Sulfonat und Sulfat.

12. Zusammensetzung (COMP) nach einem der Ansprüche 9 bis 11, wobei das PFPE-Additiv (ii) ein (Per)fluorpolyethergerüst umfasst, das der folgenden Formel (II*) entspricht:
-(X*)_{a*}-O-(R_{f^})-(X**)_{b*}- (II*)
wobei a* und b*, gleich oder voneinander verschieden, gleich oder größer als 1 sind;
X* und X**, gleich oder voneinander verschieden, ausgewählt sind aus -CF₂-, -CF₂CF₂-, -CF (CF₃) - und -CF₂CH₂-;
R_{f^} eine vollständig oder teilweise fluorierte Kette ist, die vorzugsweise aus Wiederholungseinheiten R° besteht, wobei die Wiederholungseinheiten unabhängig ausgewählt sind aus der Gruppe bestehend aus:
(i) -CFXO-, wobei X -F oder -CF₃ ist;
(ii) -CFXCFXO-, wobei X bei jedem Auftreten gleich oder verschieden -F oder -CF₃ ist, mit der Maßgabe, dass wenigstens eines von X -F ist;
(iii) -CF₂CF₂CF₂O-;
(iv) -CF₂CF₂CF₂CF₂O-;
(v) -(CF₂)ⱼ-CFZ-O-, wobei j eine ganze Zahl von 0 bis 3 ist und Z eine Gruppe der allgemeinen Formel -O-R(_{f-a})-T ist, wobei R(_{f-a}) eine Fluoropolyoxyalkenkette ist, die eine Anzahl von Wiederholungseinheiten von 0 bis 10 umfasst, wobei die Wiederholungseinheiten ausgewählt sind aus den folgenden : -CFXO-, -CF₂CFXO-, -CF₂CF₂CF₂O-, -CF₂CF₂CF₂CF₂O-, wobei jedes X unabhängig -F oder -CF₃ ist und T eine C₁-C₃-Perfluoralkylkette ist.

13. Verwendung der Zusammensetzung (COMP) nach einem der Ansprüche 1 bis 12 als Schmiermittel für:
- elektrische Komponenten, vorzugsweise ausgewählt aus der Gruppe bestehend aus elektrischen Steckverbindern, Schaltanlagen und Leistungsschaltern; und/oder
- mechanische Komponenten, vorzugsweise ausgewählt aus Kugellagern.

14. Fett umfassend Zusammensetzung (COMP) nach einem der Ansprüche 1 bis 12.

## Revendications

1. Composition [composition (COMP)] comprenant :
- au moins un copolymère à blocs [copolymère PFPE] comprenant une première et une seconde chaîne (per)fluoropolyéther [chaîne PFPE] possédant chacune deux extrémités de chaîne, où la première extrémité de chaîne desdites première et seconde chaînes PFPE comprend un groupe alkyle perfluoré et la seconde extrémité de chaîne desdites première et seconde chaînes PFPE sont liées l'une à l'autre via :
- au moins un premier bloc [bloc (1)] répondant à la formule (I) : 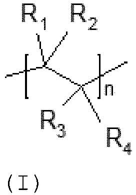 dans laquelle
n est 0 ou un entier de 1 à 3 ;
R₁ à R₄, chacun indépendamment, est choisi dans le groupe comprenant, de préférence constitué par, un atome de fluor, un groupe alkyle perfluoré linéaire ou ramifié ayant de 1 à 6 atomes de carbone, un groupe de formule (II) :
(II) - (R₁₀)t[C(R₁₁)(R₁₂)-C (R₁₃)(R₁₄)(R₁₅)]_{z}
dans laquelle
R₁₀ est un atome d'oxygène, une chaîne alkyle perfluorée bi-/tri-/tétravalente comprenant de 1 à 24 atomes de carbone éventuellement interrompue par et/ou comprenant au moins un atome d'oxygène,
t est zéro ou 1,
z est un entier de 1 à 3 ;
R₁₁ à R₁₅, chacun indépendamment, est choisi dans le groupe comprenant, de préférence constitué par, un atome de fluor, un groupe alkyle linéaire ou ramifié perfluoré ayant de 1 à 6 atomes de carbone et un groupe de formule (III) :
-[(A^)_{a^}-(B^)_{v^}-(E^)_{L^}]_{u^}-(C^)-T (III)
dans laquelle
a^ est zéro ou 1,
v^ est zéro ou un entier de 1 à 3,
L^ est zéro ou un entier de 1 à 250,
u^ est zéro ou un entier de 1 à 50 ;
A^ est une chaîne PFPE
B^ est un groupe de formule :
- [C(R_{1^})(R_{2^})-C(R_{3^})(R_{4^})]-
où R_{1^} à R_{4^} chacun indépendamment a la signification définie ci-dessus pour chacun parmi R₁ à R₄,
E^ est un groupe de formule -(CR_{100^}R_{101^}CR_{102^}R_{103^})-
dans laquelle
R_{100^} et R_{101^} sont choisis indépendamment parmi un atome d'hydrogène, un atome d'halogène, plus préférablement un atome de fluor ou de chlore, et
R_{102^} et R_{103^} sont choisis indépendamment parmi un atome d'hydrogène, un atome d'halogène, plus préférablement un atome de fluor ou de chlore ; chaîne alkyle linéaire ou ramifiée comprenant de 1 à 6 atomes de carbone, contenant éventuellement au moins un hétéroatome choisi parmi O, N et S ; -OR₂₀₀, où R₂₀₀ est une chaîne perfluorée linéaire ou ramifiée comprenant de 1 à 6 atomes de carbone ou un groupe de formule -CF₂OR₂₀₁, où R₂₀₁ est une chaîne alkyle perfluorée comprenant de 1 à 6 atomes de carbone, éventuellement interrompue par un ou plusieurs atomes d'éther d'oxygène ; ou
l'un parmi R_{100^} et R_{101^} et l'un parmi R_{102^} et R_{103^} sont un atome de fluor et l'autre parmi R_{100^} et R_{101^} et l'autre parmi R_{102^} et R_{103^} forment ensemble un cycle cyclique perhalogéné à 4 à 6 chaînons, éventuellement comprenant des hétéroatomes, tels que des atomes d'oxygène ;
C^ est une chaîne PFPE, et
T est un groupe alkyle perfluoré ;
- au moins un deuxième bloc [bloc (2)] répondant à la formule (IV) :
- [(CR^{1*}R^{2*}CR^{3*}R^{4*})_{n*}- (E) _{L}]- (IV)
dans laquelle
n* est zéro ou un entier de 1 à 250,
L est zéro ou un entier de 1 à 250 et
la somme de n* et L est 0 ou de 1 à 250 ;
R^{1*} et R^{2*} sont choisis indépendamment parmi un atome d'hydrogène, un atome d'halogène, de préférence encore un atome de fluor ou de chlore, et
R^{3*} et R^{4*} sont choisis indépendamment parmi un atome d'hydrogène, un atome d'halogène, plus préférentiellement un atome de fluor ou de chlore ; chaîne alkyle linéaire ou ramifiée comprenant de 1 à 6 atomes de carbone, contenant éventuellement au moins un hétéroatome choisi parmi O, N et S ; -OR₂₀₀, où R₂₀₀ est une chaîne perfluorée linéaire ou ramifiée comprenant de 1 à 6 atomes de carbone ou un groupe de formule -CF₂OR₂₀₁, où R₂₀₁ est une chaîne alkyle perfluorée comprenant de 1 à 6 atomes de carbone, éventuellement interrompue par un ou plusieurs atomes d'éther d'oxygène ; ou
l'un parmi R^{1*} et R^{2*} et l'un parmi R^{3*} et R^{4*} sont un atome de fluor et l'autre parmi R^{1*} et R^{2*} et l'autre parmi R^{3*} et R^{4*} forment ensemble un cycle cyclique perhalogéné à 4 à 6 chaînons, comprenant éventuellement des hétéroatomes, tels que des atomes d'oxygène ;
E a la même signification que celle fournie pour E^ ci-dessus;
- éventuellement, au moins un troisième bloc [bloc (3)] comprenant une chaîne PFPE ;
à la condition que :
dans ledit copolymère PFPE :
-- au moins l'un de n, n* et L est différent de 0 ;
-- ledit bloc (1), ledit bloc (2) et lorsqu'il est présent ledit bloc (3) sont distribués statistiquement ;
dans ladite formule (I) :
-- l'un au moins de R₁ à R₄ est un groupe de formule (II),
-- l'un de R₁₁ ou R₁₂ et l'un de R₁₃ à R₁₅ est un groupe de formule (III) ;
dans ladite formule (III) et ladite formule (IV)
-- les motifs répétitifs sont distribués statistiquement,
dans ladite formule (III)
-- lorsque a^ est 1 au moins l'un de ν^ et L^ est différent de 0 ;
et
- jusqu'à 20,0 % en poids sur la base du poids total de la composition (COMP) d'au moins un sel d'un polymère (per)fluoropolyéther [additif PFPE] comprenant un squelette (per)fluoropolyéther ayant deux extrémités de chaîne liées à des côtés opposés dudit squelette, où au moins une extrémité de chaîne comprend au moins un groupe choisi parmi :
(i) un groupe acide choisi parmi : -COO⁻, -OSO₃²⁻, -OPO₃²⁻ , -SO₃⁻,
où ledit groupe acide est salifié avec au moins un sel métallique inorganique ou avec un sel organique choisi parmi un sel d'ammonium et un sel de phosphonium ;
(ii) un groupe ammonium et au moins un contre-ion inorganique ou organique ;
où la somme dudit copolymère de PFPE et dudit additif de PFPE totalisent jusqu'à 100 % en poids de la composition (COMP).

2. Composition (COMP) selon la revendication 1, ladite composition (COMP) contenant au moins un ingrédient supplémentaire, de préférence choisi dans le groupe comprenant : antirouille, antioxydants, modificateurs rhéologiques, inhibiteurs de corrosion, colorants, pigments.

3. Composition (COMP) selon la revendication 1 ou 2, ladite composition (COMP) étant exempte d'additif(s) sous forme de particules solides.

4. Composition (COMP) selon l'une quelconque des revendications précédentes, dans laquelle ledit copolymère de PFPE a une viscosité d'au moins 1 000 mm²/s, mesurée à 20 °C selon des procédés standards, tels que la norme ASTM D445, ou avec un rhéomètre Anton Paar MCR 502 à spectromètre mécanique dynamique équipé de plaques parallèles de 25 mm, à 1 rad/s et à 25 °C.

5. Composition (COMP) selon l'une quelconque des revendications précédentes, dans laquelle ladite première extrémité de chaîne desdites première et seconde chaînes PFPE comprend un groupe alkyle linéaire perfluoré ayant de 1 à 3 atomes de carbone.

6. Composition (COMP) selon l'une quelconque des revendications précédentes, dans laquelle :
- ladite première chaine PFPE est liée audit bloc (1) par une liaison sigma ou un groupe -(C)- choisi parmi - CF₂-, -CF₂CF₂- ou -O- ; et/ou
- ledit bloc (2) est lié à ladite seconde chaîne PFPE par une liaison sigma ou un groupe -(C)- choisi parmi - CF₂-, -CF₂CF₂- ou -O- ; et/ou
- lorsque à la fois ledit bloc (1) et ledit bloc (2) sont présents, ils sont reliés via une liaison sigma.

7. Composition (COMP) selon l'une quelconque des revendications précédentes, dans laquelle chacune desdites chaînes de PFPE est une chaîne [chaîne (R_{f}) ] partiellement ou totalement fluorée comprenant, de préférence constituée par, des motifs répétitifs R°, lesdits motifs répétitifs étant indépendamment choisis dans le groupe constitué par :
(i) -CFXO-, dans lequel X est F ou CF₃ ;
(ii) -CFXCFXO-, dans lequel X, égal ou différent à chaque occurrence, est F ou CF₃, à condition qu'au moins l'un parmi X soit -F ;
(iii) -CF₂CF₂CW₂O-, dans lequel chacun de W, égaux ou différents les uns des autres, sont F, Cl, H ;
(iv) -CF₂CF₂CF₂CF₂O- ;
(v) -(CF₂)_{w}-CFZ-O- où w est un entier de 0 à 3 et Z est un groupe de formule générale -O-R(_{f-a},-Y dans laquelle R(_{f-a}) est une chaîne fluoropolyoxyalcène comprenant un nombre de motifs répétitifs de 0 à 10, lesdits motifs répétitifs étant choisis parmi les suivants : -CFXO-, - CF₂CFXO-, -CF₂CF₂CF₂O-, -CF₂CF₂CF₂CF₂O-, chacun de X étant indépendamment F ou CF₃ et Y étant un groupe perfluoroalkyle en C₁-C₃.

8. Composition (COMP) selon l'une quelconque des revendications précédentes, dans laquelle ledit copolymère PFPE comprend une première et une seconde chaînes PFPE ayant chacune deux extrémités de chaîne, dans laquelle la première extrémité de chaîne desdites première et seconde chaînes PFPE comprend un groupe alkyle perfluoré et la seconde extrémité de chaîne desdites première et seconde chaînes PFPE sont liées l'une à l'autre via :
- au moins un bloc (2) répondant à la formule (IV) :
-[ (CR^{1*}R^{2*}CR^{3*}R^{4*})_{n*}-(E)_{L}]- (IV)
dans laquelle
n* est un entier de 1 à 250,
L est un entier de 1 à 250, et
la somme de n* et L est de 1 à 250 ;
R^{1*} et R^{2*} sont un atome de fluor, et
R^{3*} et R^{4*} sont choisis indépendamment parmi un atome d'halogène, plus préférablement un atome de fluor ou de chlore ; chaîne alkyle linéaire ou ramifiée comprenant de 1 à 6 atomes de carbone, contenant éventuellement au moins un hétéroatome choisi parmi O, N et S ; -OR₂₀₀ où R₂₀₀ est une chaîne perfluorée linéaire ou ramifiée comprenant de 1 à 6 atomes de carbone ou un groupe de formule -CF₂OR₂₀₁ où R₂₀₁ est une chaîne alkyle perfluorée comprenant de 1 à 6 atomes de carbone, éventuellement interrompue par un ou plusieurs atomes d'éther d'oxygène ;
E est un groupe de formule -(CR_{100^}R_{101^}CR_{102^}R_{103^})-
dans laquelle
R_{100^} et R_{101^} sont choisis indépendamment parmi un atome d'halogène, de préférence un atome de fluor ou de chlore, et
R_{102^} et R_{103^} sont choisis indépendamment parmi un atome d'halogène, de préférence un atome de fluor ou de chlore ; -OR₂₀₀ où R₂₀₀ est une chaîne perfluorée linéaire ou ramifiée comprenant de 1 à 6 atomes de carbone ou un groupe de formule -CF₂OR₂₀₁ où R₂₀₁ est une chaîne alkyle perfluorée comprenant de 1 à 6 atomes de carbone, éventuellement interrompue par un ou plusieurs atomes d'éther d'oxygène ;
et
- éventuellement, au moins un bloc (3) comprenant une chaîne PFPE.

9. Composition (COMP) selon l'une quelconque des revendications précédentes, dans laquelle ledit additif de PFPE est présent en une quantité d'au moins 0,1 % en poids et jusqu'à 20,0 % en poids sur la base du poids total de la composition (COMP).

10. Composition (COMP) selon l'une quelconque des revendications précédentes, dans laquelle dans l'additif de PFPE (i) :
- ledit groupe acide est un groupe carboxylique salifié avec un sel métallique inorganique ou le sel organique choisi parmi un sel d'ammonium et un sel de phosphonium ; ou
- ledit sel d'ammonium organique est choisi parmi ceux de formule :
N⁺H (R₂₁) (R₂₂) (R₂₃)
dans laquelle chacun parmi R₂₁, R₂₂, R₂₃ est choisi parmi : une chaîne aliphatique en C₁-C₂₀ linéaire ou ramifiée, contenant éventuellement au moins un hétéroatome ; ou deux de R₂₁, R₂₂, R₂₃ forment ensemble un cycle aliphatique ou aromatique à 5 ou 6 chaînons, ledit cycle contenant éventuellement au moins un hétéroatome et/ou étant éventuellement substitué par au moins une chaîne alkyle, linéaire ou ramifiée, comprenant de 1 à 10 atomes de carbone et contenant éventuellement au moins un hétéroatome, et le troisième de R₂₁, R₂₂, R₂₃ est tel que défini ci-dessus.

11. Composition (COMP) selon l'une quelconque des revendications précédentes, dans laquelle dans l'additif PFPE (ii) :
- ledit groupe ammonium est choisi parmi ceux de formule :
§-N⁺ (R₃₁) (R₃₂) (R₃₃)
dans laquelle
§ indique la liaison au squelette (per)fluoropolyéther, et
chacun des R₃₁, R₃₂, R₃₃ est choisi parmi : une chaîne aliphatique en C₁-C₂₀ linéaire ou ramifiée contenant éventuellement au moins un hétéroatome ; ou deux de R₃₁, R₃₂, R₃₃ forment ensemble un cycle aliphatique ou aromatique à 5 ou 6 chaînons, ledit cycle contenant éventuellement au moins un hétéroatome et/ou étant éventuellement substitué par au moins une chaîne alkyle, linéaire ou ramifiée, comprenant de 1 à 10 atomes de carbone et contenant éventuellement au moins un hétéroatome, et le troisième de R₃₁, R₃₂, R₃₃ est tel que défini ci-dessus ; et
- ledit au moins un contre-ion inorganique ou organique est sélectionné dans le groupe comprenant : Br⁻ , I⁻, Cl⁻, BF₄⁻, NO₃⁻, OH⁻, [(CF₃SO₂)₂N]⁻, sulfonate et sulfate.

12. Composition (COMP) selon l'une quelconque des revendications 9 à 11, dans laquelle ledit additif PFPE (ii) comprend un squelette (per)fluoropolyéther répondant à la formule suivante (II*) :
-(X*)_{a*}-O-(R_{f^})-(X**)_{b*}- (II*)
dans laquelle a* et b*, égaux ou différents l'un de l'autre, sont égaux ou supérieurs à 1 ;
X* et X**, égaux ou différents l'un de l'autre, sont choisis parmi -CF₂-, -CF₂CF₂-, -CF (CF₃) - et -CF₂CH₂- ;
R_{f^} est une chaîne totalement ou partiellement fluorée comprenant, de préférence constituée de motifs répétitifs R°, lesdits motifs répétitif étant indépendamment choisis dans le groupe constitué par :
(i) -CFXO-, dans laquelle X est -F ou -CF₃ ;
(ii) -CFXCFXO-, dans laquelle X, égal ou différent à chaque occurrence, est -F ou -CF₃, à condition qu'au moins l'un parmi X soit -F ;
(iii) -CF₂CF₂CF₂O- ;
(iv) -CF₂CF₂CF₂CF₂O- ;
(v) -(CF₂)ⱼ-CFZ-O- où j est un entier de 0 à 3 et Z est un groupe de formule générale -O-R(_{f-a})-T où R(_{f-a}) est une chaîne fluoropolyoxyalcène comprenant un nombre de motifs répétitifs de 0 à 10, lesdits motifs répétitifs étant choisis parmi les suivants : -CFXO-, -CF₂CFXO-, - CF₂CF₂CF₂O-, -CF₂CF₂CF₂CF₂O-, chacun de X étant indépendamment -F ou -CF₃ et T étant une chaîne perfluoroalkyle en C₁-C₃.

13. Utilisation de la composition (COMP) selon l'une quelconque des revendications 1 à 12 comme lubrifiant pour :
- des composants électriques, de préférence choisis dans le groupe comprenant : des connecteurs électriques, des appareils de commutation et des coupe-circuits ; et/ou
- des composants mécaniques, de préférence choisis parmi des roulements à billes.

14. Graisse comprenant une composition (COMP) telle que définie dans l'une quelconque des revendications 1 à 12.
